# EUROPEAN PATENT SPECIFICATION

(11) **EP 0 582 058 B1**
(45) Date of publication and mention of the grant of the patent: **19.02.1997**
(21) Application number: 93108697.9
(22) Date of filing: 28.05.1993
(51) Int. Cl.: B41J 13/22

(54) **Image forming apparatus with sheet handling device**
Bilderzeugungsgerät mit Blatthandhabungsvorrichtung
Appareil de formation d'images avec dispositif pour la manipulation de feuilles

(30) Priority: 06.08.1992 KR 1413892
(43) Date of publication of application: 09.02.1994
(73) Proprietor: SAMSUNG ELECTRONICS CO., LTD., Suwon-city, Kyungki-do 441-373 (KR)
(72) Inventor: Park, Geun-yong, Suwon-city, Kyungki-do (KR)
(74) Representative: Grünecker, Kinkeldey, Stockmair & Schwanhäusser Anwaltssozietät

(56) References cited:
- DE-A- 4 201 636
- US-A- 4 543 004
- US-A- 4 900 008
- US-A- 5 092 698

## Description

### BACKGROUND OF THE INVENTION

The present invention relates to an image forming apparatus with the features in the preamble of the claim.

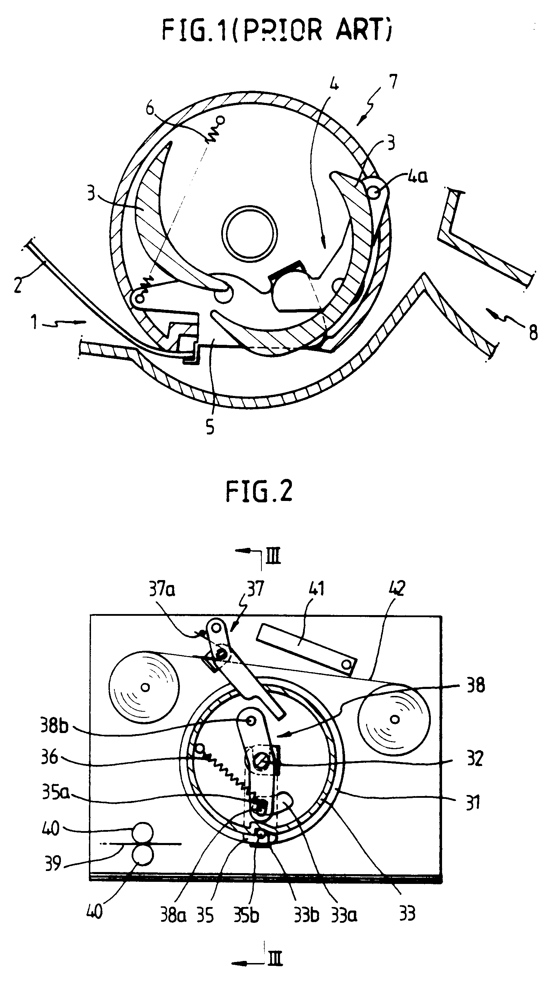

Referring to FIG. 1, the operation of such a conventional image forming apparatus will be described. When a sheet of paper 2 is fed via an inlet 1, a clamp 5 clamps the entered paper 2 by the elasticity of a spring 6 while a bracket 4 rotates around a hinge by means of a pin 4a operated along a cam 3. Then, as a drum 7 rotates counter-clockwise along with clamping sheet of paper 2, three colors, i.e., yellow, magenta and cyan, are consecutively printed on the paper. Thereafter, during outwardly ejecting the printed sheet of paper 2, drum 7 rotates clockwise to release the clamping of paper 2 in a manner counter to the clamping operation. Successively, when the leading edge of sheet of paper 2 faces an outlet 8, drum 7 rotates counter-clockwise to force the sheet of paper out of outlet 8.

That is, in the conventional image forming apparatus constructed as above, while a drum rotates clockwise upon completion of the printing, the clamping of a sheet of paper is released. Then, the drum rotates counter-clockwise, forcing the paper out. For this operation, it takes additional time to outwardly eject the paper, which in turn lengthens the overall printing time by as much. Accordingly, the image forming apparatus of the prior art has difficulty in high-speed printing.

### SUMMARY OF THE INVENTION

Therefore, it is an object of the invention to provide an image forming apparatus with a paper clamping mechanism which allows a printing sheet to be transported towards the ejection outlet at the same time as the last colour is being printed whereby the print throughput is increased by reducing the sheet ejection time.

To achieve the above object of the present invention the image forming apparatus as set forth above is characterised by the features of the characterising part of the claim.

According to the present invention the overall printing time can be curtailed by that amount of time by which the time required for outwardly ejecting the paper is reduced.

### BRIEF DESCRIPTION OF THE DRAWINGS

The above objects and other advantages of the present invention will become more apparent by describing in detail a preferred embodiment thereof with reference to the attached drawings in which:
FIG. 1 is a partially cutaway side view showing a conventional image forming apparatus;
FIG. 2 is a partially cutaway side view showing an image forming apparatus according to the present invention;
FIG. 3 is a partially cutaway side view of the image forming apparatus, taken along line III-III of FIG. 2;
FIG. 4 is a partially cutaway side view showing the clamping operation of the present image forming apparatus shown in FIG. 2;
FIG. 5 is a partially cutaway side view showing the initial stage of printing operation in the present image forming apparatus shown in FIG. 2; and
FIG. 6 is a partially cutaway side view showing the ejecting operation of the present image forming apparatus shown in FIG. 2.

### DETAILED DESCRIPTION OF THE PREFERRED EMBODIMENT

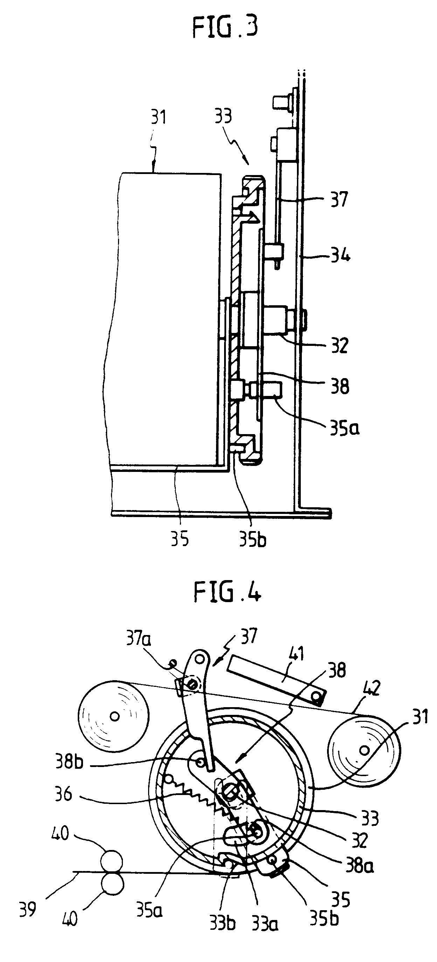

As shown in FIGs. 2 and 3, an image forming apparatus according to the present invention is constructed in such a manner that, a drum gear 33 is installed on a rotary shaft 32 of a drum 31. The drum gear is provided with a first guide slot 33a and a cam 33b. The rotary shaft 32 of drum 31 is rotatably supported by a support plate 34. Also, rotary shaft 32 is coupled with one end of a clamp 35 having both a first interlocking pin 35a inserted into first guide slot 33a and a cam pin 35b interlocked with cam 33b of drum gear 33, in such a manner that clamp 35 can rotate and rectilinearly move along radii of the drum. Clamp 35 is elastically biased clockwise by means of a first spring 36. A release lever 37 which is elastically biased counter-clockwise by a second spring 37a, is rotatably installed on support plate 34. A lifter 38 is rotatable on rotary shaft 32 of drum 31, wherein one end of lifter 38 has a second guide slot 38a receiving first interlocking pin 35a of clamp 35 and the other end thereof has a second interlocking pin 38b interlinked with release lever 37.

A reference numeral 39 designates a sheet of paper, 40 is a paper-feed roller, 41 is a thermal transfer head, 42 is an ink-ribbon, and 43 is a paper-output roller.

Hereinbelow, the operation of the image forming apparatus according to the present invention will be described.

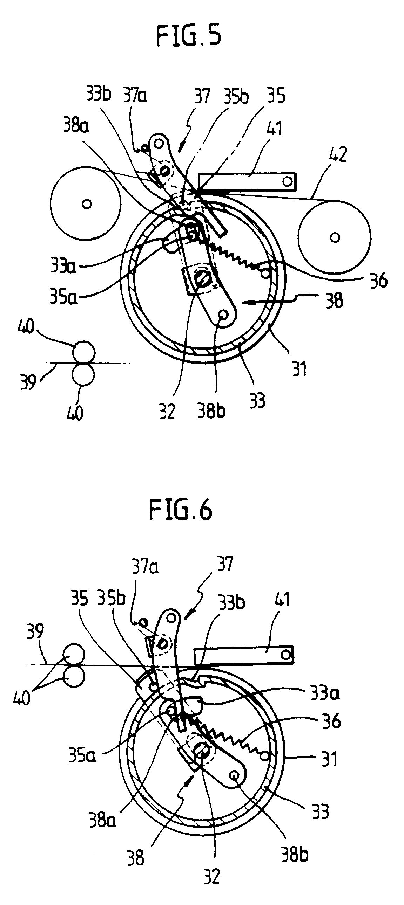

To begin with, when paper 39 is supplied by means of paper feed roller 40 as shown in FIG. 2, release lever 37 rotates clockwise to thereby rotate second interlocking pin 38b of lifter 38 counter-clockwise. Accordingly, lifter 38 rotates counter-clockwise. Due to the counter-clockwise rotation of lifter 38, first interlocking pin 35a of clamp 35 which is coupled to second guide slot 38a of lifter 38 is rotated counter-clockwise. By this operation, cam pin 35b of clamp 35 becomes projected from the outer circumference of drum 31 as shown in with the solid-lined shape of FIG. 4, while moving along cam 33b of drum gear 33. Upon the placement of paper 39 at a predetermined position, release lever 37 rotates counter-clockwise, and clamp 35 is released so as to fall into a position illustrated by the virtual line of FIG. 4, by the restoring force of first spring 36, so that paper 39 is clamped. When the clamping of the paper is completed, drum 31 rotates counter-clockwise, which transfers clamp 35 to its initial printing position as shown in FIG. 5. By the transfer of clamp 35 to the initial printing position, thermal transfer head 41 rotates to thus press ink-ribbon 42 onto paper 39. Under this state, while drum 31 rotates counter-clockwise, two colors, i.e., yellow and magenta, are successively printed on paper 39. When the two-color printing is completed, release lever 37 rotates clockwise to thereby rotate first interlocking pin 35a of clamp 35 counter-clockwise. Thus, along with the projection of clamp 35 from the outer circumference of drum 31 while being rotated counter-clockwise by both cam pin 35b formed thereon and cam 33b formed in drum gear 33, the paper is released from being clamped as shown in FIG. 6. Additionally, drum 31 rotates counter-clockwise, resulting in simultaneously printing cyan on paper 39 and outwardly ejecting the sheet of paper by means of output roller 43.

In the image forming apparatus as described above, the color cyan, which is printed last, is printed simultaneously as the paper is outwardly ejected As a result, the time required for forcing the paper out can be shortened as compared with the conventional apparatus wherein the paper is ejected after printing has completed, thereby enabling high-speed printing.

## Claims

1. An image forming apparatus comprising a drum (31); a clamp (35) for releasably clamping a sheet of paper to the drum (31); a first spring (36) for providing clamping force to said clamp (35); and a release lever (37) for releasing the clamping force of said clamp (35), **characterized by**
a drum gear (33) installed on a rotary shaft (32) of said drum (31), and provided with a first guide slot (33a) and a cam (33b); said clamp (35) coupled to said rotary shaft (32) of said drum (31) to be rotatable and rectilinearly reciprocative, one end of the clamp (35) having a cam pin (35b) interlocked with said cam (33b) in a paper clamp position of the clamp and having a first interlocking pin (35a) coupled to said first guide slot (33a) and spaced radially inward from the cam pin (35b); said release lever (37) capable of swinging on a support plate (34) on which said rotary shaft (32) of said drum (31) is supported, and elastically biased counter-clockwise by means of a second spring (37a); and a lifter (38) rotatably coupled to said rotary shaft (32) of said drum (31), one end having a second guide slot (38a) into which said first interlocking pin (35a) of said clamp (35) is inserted and the other end having a second interlocking pin (38b), whereby for upwardly moving said clamp (30) from said drum (31) the release lever (37) is in engagement with the second interlocking pin (38b) in a paper supply position of the drum and in engagement with the first interlocking pin (35a) in a paper ejecting position of the drum.

## Patentansprüche

1. Bilderzeugungsgerät mit einer Trommel (31), einer Klemme (35) zum lösbaren Klemmen eines Blattes Papier auf der Trommel (31); einer ersten Feder (36) zum Bereitstellen einer Klemmkraft für die Klemme (35) und einem Freigabehebel (37) zum Lösen der Klemmkraft der Klemme (35),
**dadurch gekennzeichnet,**
daß ein Trommelzahnrad (33) auf einer Drehwelle (32) der Trommel (31) angeordnet und mit einem ersten Führungsschlitz (33a) und einem Nocken (33b) ausgebildet ist; die Klemme (35) mit der Drehwelle (32) der Trommel (31) drehbar und zur geradlinigen Hin- und Herbewegung gekoppelt ist, wobei ein Ende der Klemme (35) einen Nockenstift (35b) aufweist, der mit den Nocken (33b) in einer Papierklemmposition der Klemme in Eingriff ist, und mit einem ersten Verriegelungsstift (35a), der mit dem ersten Führungsschlitz (33a) gekoppelt und radial beabstandet einwärts vom Nockenstift (33b) angeordnet ist; der Freigabehebel (37) auf einer Stützplatte (34) verschwenkbar gelagert ist, auf welcher die Drehwelle (32) der Trommel (31) gelagert ist, und elastisch mittels einer zweiten Feder (37a) in Gegenuhrzeigerrichtung vorgespannt ist, und ein Heber (38) drehbar an der Drehwelle (32) der Trommel (31) angekoppelt ist, von welchem ein Ende mit einem zweiten Führungsschlitz (38a) ausgebildet ist, in welchen der erste Verriegelungsstift (35a) der Klemme (35) eingesetzt ist, und von welchem das andere Ende einen zweiten Verriegelungsstift (38b) aufweist, wobei zur Aufwärtsbewegung der Klemme (30) von der Trommel (31) der Freigabehebel (37) in Eingriff mit dem zweiten Verriegelungsstift (38b) in einer Papierzufuhrstellung der Trommel ist und in Eingriff mit dem ersten Verriegelungsstift (35a) in einer Papierabgabestellung der Trommel ist.

## Revendications

1. Appareil de formation d'images comprenant un tambour (31); un élément de serrage (35) pour serrer, de manière amovible, une feuille de papier sur le tambour (31); un premier ressort (36) conçu pour fournir une force de serrage audit élément de serrage (35); et un levier de libération (37) conçu pour relâcher la force de serrage dudit élément de serrage (35), caractérisé par :
un engrenage de tambour (33) monté sur un arbre rotatif (32) dudit tambour (31) et pourvu d'une première fente de guidage (33a) et d'une came (33b); ledit élément de serrage (35) étant couplé audit arbre rotatif (32) dudit tambour (31), de manière à pouvoir tourner et à se déplacer de façon rectiligne en va-et-vient, une extrémité de l'élément de serrage (35) ayant une tige à came (35b) interverrouillée avec ladite came (33b), dans une position de serrage de papier de l'élément de serrage et ayant une première tige d'interverrouillage (35a) couplée à ladite première fente de guidage (33a) et espacée radialement vers l'intérieur de la tige à came (35b); ledit levier de libération (37) pouvant osciller sur une plaque de support (34) sur laquelle est monté ledit arbre rotatif (32) dudit tambour (31), et étant déplacé élastiquement dans le sens contraire des aiguilles d'une montre au moyen d'un deuxième ressort (37a); et un élément de levage (38) couplé à rotation audit arbre rotatif (32) dudit tambour (31), une extrémité ayant une deuxième fente de guidage (38a) dans laquelle est insérée ladite première tige d'interverrouillage (35a) dudit élément de serrage (35) et l'autre extrémité ayant une deuxième tige d'interverrouillage (38b), de manière que, pour déplacer vers le haut ledit élément de serrage (30) depuis ledit tambour (31), le levier de libération (37) soit en contact avec la deuxième tige d'interverrouillage (38b), dans une position d'amenée de papier du tambour, et en contact avec la première tige d'interverrouillage (35a), dans une position d'éjection de papier du tambour.
